# EUROPÄISCHE PATENTSCHRIFT

(11) **EP 2 772 395 B1**
(45) Veröffentlichungstag und Bekanntmachung des Hinweises auf die Patenterteilung: **30.05.2018**
(21) Anmeldenummer: 14154776.0
(22) Anmeldetag: 12.02.2014
(51) Int. Cl.: B60R 21/0132

(54) **Vorrichtung zum Bereitstellen einer Auslösecharakteristik für das Auslösen einer Sicherheitseinrichtung eines Kraftfahrzeug**
Device for providing a trigger characteristic for a safety equipment of a motor vehicle
Dispositif pour mettre à disposition une caractéristique de déclenchement d'un équipement de sécurité de véhicule automobile

(30) Priorität: 27.02.2013 DE 102013003267
(43) Veröffentlichungstag der Anmeldung: 03.09.2014
(73) Patentinhaber: Volkswagen Aktiengesellschaft, 38440 Wolfsburg (DE)
(72) Erfinder: Meier, Andreas, 39130 Magdeburg (DE)

(56) Entgegenhaltungen:
- EP-A1- 0 882 624
- EP-A1- 2 492 152
- CN-A- 102 463 951
- DE-A1- 10 234 624
- DE-A1-102004 037 704
- DE-A1-102010 003 333
- DE-B3-102009 012 407

## Beschreibung

Ausführungsbeispiele der vorliegenden Erfindung befassen sich mit dem Erzeugen bzw. der Bereitstellung einer Auslösecharakteristik für eine Sicherheitseinrichtung in einem Kraftfahrzeug.

Das Auslösen von Sicherheitseinrichtungen, wie beispielsweise Airbags oder Gurtstraffern, bei Kollisionen von Kraftfahrzeugen erhöht die Sicherheit der Insassen eines verunfallenden Fahrzeugs teilweise erheblich. Dabei ist das Treffen der Auslöseentscheidung, also das Erzeugen eines ein Auslösen einer Sicherheitseinrichtung bewirkenden Auslösesignals eine äußerst zeitkritische Aufgabe. Bei typischen Frontalkollisionen muss die Entscheidung beispielsweise innerhalb der ersten 10 bis 20 ms der Kollision getroffen werden, um den gewünschten Effekt des Schutzes der Insassen des kollidierenden Fahrzeugs zu erzielen.

Dabei ist das Treffen der Auslöseentscheidung auch ein kostenrelevanter Aspekt, da beim Auslösen der Sicherheitseinrichtungen, die typischerweise pyrotechnisch betrieben werden, meist der komplette kostenintensive Austausch der ausgelösten Sicherheitseinrichtungen bzw. Aggregate nach dem Unfall erforderlich ist, selbst wenn dieser nur eine geringe, für den Insassen eigentlich unbedenkliche Unfallschwere hatte. Aufgrund der Kürze der Auslösungszeit nach Beginn der Kollision ist das Treffen einer Aussage über der Schwere derselben mittels der so genannten "Crash-Sensorik", die physikalische Größen bestimmt, die erst nach Beginn der Kollision für die Kollision aussagekräftig sind, wie beispielsweise Beschleunigungen oder Druckunterschiede, kaum möglich.

Um solche unerwünschten Auslösungen dennoch zu verhindern, existieren Ansätze, die zu erwartende Unfallschwere in Form eines Parameters aus Beobachtungsgrößen oder aus Parametern vorherzusagen, die einen Fahrzustand bzw. einen mit einer bevorstehenden Kollision des Kraftfahrzeugs in Verbindung stehenden Parameter vor der eigentlichen Kollision repräsentieren. Als Beispiel für solche "Pre-Crash"-Sensorik seien hier lediglich der Vollständigkeit halber ein radargestütztes Abstandswarnsystem, Ultraschall-Einparksensoren oder Kamerasysteme genannt. Mittels solcher Pre-Crash-Sensoren werden bislang einzelne Parameter bestimmt, aus denen eine zu erwartende Unfallschwere zumindest grob ableitbar ist, wie beispielsweise eine Relativgeschwindigkeit zwischen dem Fahrzeug und dem Objekt, mit dem das Fahrzeug voraussichtlich kollidieren wird.

Bei den diesbezüglich verwendeten Systemen wird die erwartete Unfallschwere also in starker Vereinfachung, beispielsweise durch Ableitung eines einzigen, die Schwere der zu erwartenden Kollision repräsentierenden Parameters bestimmt. Zur Bestimmung dieses Parameters werden unterschiedliche Verfahren eingesetzt, die von der Pre-Crash-Sensorik bereitgestellten Daten aufzubereiten, darunter beispielsweise die Verwendung von Fuzzy-Controllern oder die Verwendung von neuronalen Netzen.

Wenngleich diese Systeme dazu beitragen mögen, die Anzahl der überflüssigen Auslösungen der Sicherheitssysteme zu verringern, sind diese nicht geeignet, Informationen zu liefern, auf denen eine Bestimmung einer Auslösecharakteristik von adaptiven Sicherheitseinrichtungen bzw. Rückhaltesystemen basieren könnten. Derartige adaptive Rückhaltesysteme sind solche, bei denen eine Auslösecharakteristik der Rückhaltesysteme bzw. der Sicherheitseinrichtungen in Abhängigkeit von der Unfallschwere variiert werden kann. Ein solches adaptives Rückhaltesystem kann unter anderem dazu beitragen, die Verletzungsgefahr für den Insassen eines Kraftfahrzeugs durch das Auslösen der Sicherheitseinrichtung selbst, beispielsweise eines Gurtstraffers oder eines Airbags, zu verringern. So können beispielsweise Rippenbrüche oder Verletzungen im Gesichtsbereich vermieden werden, wenn die auf den Körper des Insassen einwirkenden Kräfte durch den Gurtstraffer oder den Airbag nicht auf eine maximale Unfallschwere ausgelegt werden müssen, wie dies bislang üblich ist.

Die europäische Patentanmeldung 2 492 152 A1 betrifft ein Kraftfahrzeug, bei dem eine Steuereinrichtung eine Auswahl einer standardmäßigen Ansteuerinformation für eine Rückhaltevorrichtung betrifft, wenn eine erste vorhergesagte Kollisionsinformation mit einer zweiten beobachteten Kollisionsinformation nicht übereinstimmt, und wobei die Steuereinrichtung ansonsten eine angepasste Ansteuerinformation verwendet.

Die deutsche Patentanmeldung 10 234 624 A1 befasst sich mit einem passiven Sicherheitssystem, bei dem durch vorausschauende Sensoren eine Prognose von crashrelevanten Signalen wie Körperschall oder Beschleunigung ermittelt wird. Stimmt mindestens eines der im Fahrzeug beim Beginn des Aufpralls gemessenen Signale mit der Prognose überein, erfolgt eine Auslösung von Schutzmaßnahmen.

Die europäische Patentanmeldung 0 882 624 A1 befasst sich mit einem Verfahren zur bedarfsgerechten Steuerung von Insassen-Sicherheitseinrichtungen unter Berücksichtigung der zu erwartenden Bewegung des Fahrgastes relativ zum Fahrzeug. Die zu erwartende Bewegung des Fahrgastes wird aufgrund des zu erwartenden Beschleunigungsverhaltens des Fahrzeugs während des Unfalls und aufgrund der aktuellen fahrgastindividuellen Parameter bestimmt. Das zu erwartende Beschleunigungsverhalten des Fahrzeugs wird auf der Basis des bis zum jeweiligen Zeitpunkt erfolgten Beschleunigungsverhaltens extrapoliert.

Das deutsche Patent 10 2009 012407 B3 befasst sich mit einer Vorrichtung zum Steuern eines adaptiven Rückhaltesystems zum Schützen eines Insassen eines Fahrzeugs, die eine Recheneinheit zum prädiktiven Berechnen einer Beschleunigungscharakteristik des bevorstehenden Unfalls des Fahrzeugs mit einem Kollisionsobjekt, eine Modelliereinheit zum physikalischen Modellieren einer physikalischen Kopplung des Insassen mit dem Fahrzeug, und eine Steuereinheit zum Steuern des adaptierten Rückhaltesystems aufweist.

Um solche Systeme einsetzen zu können, bedarf es jedoch eines Verfahrens bzw. einer Vorrichtung, die es ermöglicht, eine Auslösecharakteristik für eine Sicherheitseinrichtung bereitzustellen, die unterschiedlichen möglichen Kollisionsverläufen ausreichend Rechnung trägt.

Diesem Bedarf tragen ein Vorrichtung gemäß Patentanspruch 1, ein Verfahren gemäß Patentanspruch 8 und 9 und ein Programm mit einem Programmcode zum Durchführen eines solchen Verfahrens gemäß Patentanspruch 14 Rechnung.

Ausführungsbeispiele der vorliegenden Erfindung ermöglichen dies, indem eine Vorrichtung zum Bereitstellen einer Auslösecharakteristik für ein Auslösesignal, welches ein die Auslösecharakteristik berücksichtigendes Auslösen einer Sicherheitseinrichtung in einem Kraftfahrzeug bewirkt, eine Vorhersageeinrichtung aufweist, mittels derer eine Vorhersagefunktion bereitgestellt werden kann, die einen zeitlichen Verlauf zumindest einer kinematischen Größe des Fahrzeugs während des Verlaufs einer bevorstehenden Kollision beschreibt. Das heißt, anstelle des Vorhersagens einer oder mehrerer eine Kollision global beschreibender Parameter wird ein zeitlicher Verlauf der kinematischen Größe des Fahrzeugs während der Kollision vorhergesagt, d. h., ein Funktionsverlauf, der einer Vielzahl von aufeinander folgenden Zeitpunkten während der Kollision jeweils einen Wert für die kinematische Größe des Fahrzeugs zuweist. Dabei wird zum Bereitstellen der Vorhersagefunktion unter anderem eine Analysefunktion unter Verwendung des Beobachtungsparameters als ein Parameter der Analysefunktion ausgewertet.

Als kinematische Größe in diesem Sinne soll jede Größe verstanden werden, die die Kinematik bzw. die für die Verformung oder Deformation des Fahrzeugs während der Kollision relevanten Eigenschaften desselben beschreiben oder repräsentieren kann. Dies kann beispielsweise die Geschwindigkeit des Fahrzeugs, die Beschleunigung des Fahrzeugs, eine Ortskoordinate, eine kinetische Energie oder eine potentielle Energie sein, wie etwa die Verformungsenergie der Materialien während des Aufpralls bzw. der Kollision oder dergleichen. Um die Vorhersagefunktion bereitstellen zu können, weist die Vorrichtung ferner eine Eingabeschnittstelle auf, mittels derer zumindest ein Beobachtungsparameter empfangen wird, der einen mit einer bevorstehenden Kollision des Kraftfahrzeugs in Verbindung stehenden Parameter repräsentiert. Dieser Parameter kann beispielsweise eine Anzahl beteiligter Fahrzeuge, Relativgeschwindigkeiten zwischen dem Fahrzeug und anderen, mutmaßlich an der Kollision beteiligten Objekten, den Ort eines vermuteten Aufpralls auf das Fahrzeug, einen Aufprallwinkel, eine verbleibende Zeit bis zum Aufprall oder dergleichen repräsentieren. Verwendet werden können mithin ein oder mehrere beliebige Parameter, die mit einer bevorstehenden Kollision des Kraftfahrzeugs in Verbindung stehen und die mittels eines beliebigen Sensors der Pre-Crash-Sensorik beobachtet wurden bzw. auf Beobachtungen dieser Sensoren basieren können.

Basierend auf dieser Vorhersagefunktion ist es möglich, mittels einer Bewertungseinrichtung eine Auslösecharakteristik zu berechnen bzw. bereitzustellen, indem die Vorhersagefunktion auf Vorhandensein einer bestimmten Charakteristik in der Vorhersagefunktion hin überprüft wird. Ist diese vorhanden, wird eine Auslösecharakteristik für die Sicherheitseinrichtung bereitgestellt oder erzeugt.

Das Verwenden einer Vorhersagefunktion, die den zeitlichen Verlauf zumindest einer kinematischen Größe des Fahrzeugs während der Kollision selbst beschreibt, kann den Vorteil bieten, dass durch relativ einfache mathematische Auswertungen der Vorhersagefunktion nahezu beliebige für das Bestimmen der Auslösecharakteristik der Sicherheitseinrichtung relevanten Informationen bzw. Charakteristiken in der Vorhersagefunktion identifiziert und verwendet werden können. Beispielsweise kann es so möglich sein, die maximale während der Kollision auftretende Beschleunigung, die integrale Zeitdauer der Kollision bzw. des Crashs sowie die zeitliche Lage von Peaks im Beschleunigungsverlauf während der Kollision zu bestimmen, sodass basierend darauf beliebige Auslösecharakteristiken erzeugt bzw. ausgewählt werden können. Beispiele für Auslösecharakteristiken sind unter anderem ein vorgegebener Kraftverlauf eines Gurtstraffersystems, die Verwendung einer bestimmten von einer Mehrzahl von möglichen Zündstufen des Airbags bzw. der genaue Zeitpunkt von dessen Auslösung.

Gemäß einigen Ausführungsbeispielen der vorliegenden Erfindung wird zum Bereitstellen der Vorhersagefunktion eine stetige Analysefunktion ausgewertet, bei der der Beobachtungsparameter ein Parameter der Analysefunktion ist. Das Verwenden einer solchen Funktion hat den Vorteil, dass diese einen Verlauf der kinematischen Größe zeitkontinuierlich vorhersagen kann, sodass auch eine zeitliche Entwicklung der zu erwartenden Belastung eines Insassen eines kollidierenden Fahrzeugs erkennbar wird und nicht nur global sondern auch in Abhängigkeit vom Verlauf der Kollision bzw. vom Zeitpunkt im Verlauf der Kollision die Auslösecharakteristik bestimmt werden kann. Dadurch kann möglicherweise der Schutz für den Insassen maximiert und die zusätzliche Belastung für den Insassen durch die Sicherheitseinrichtung selbst gegebenenfalls minimiert werden. Um dies zu erreichen, kann beispielsweise eine Charakteristik für ein Auslösesignal darin bestehen, dass das Auslösesignal nicht etwa so erzeugt wird, dass der Airbag beim Zeitpunkt maximaler negativer Beschleunigung des Fahrzeugs maximal aufgeblasen ist, sondern dass sich dieser möglicherweise bereits noch in der Phase des Aufblasens oder in der Phase des Zusammensackens befindet, um bei gleichzeitig ausreichendem Schutz für den Insassen des Fahrzeugs eine minimale Belastung für denselben zu erzeugen oder um auch bei nachfolgenden oder vorhergehenden Peaks im Beschleunigungsverlauf ebenfalls ausreichend Schutzwirkung zu entfalten. Gemäß einigen Ausführungsbeispielen der vorliegenden Erfindung kann die Analysefunktion selbst von der Zeit als weiterem Parameter abhängen. Gemäß der vorliegenden Erfindung wird als Analysefunktion eine im mathematischen Sinne analytische Funktion verwendet.

Gemäß einigen Ausführungsbeispielen der vorliegenden Erfindung ist die vorbestimmte Charakteristik das Überschreiten einer vorbestimmten Maximalbeschleunigung oder das Überschreiten einer vorbestimmten maximalen mittleren Beschleunigung des Fahrzeugs. Wird als Schwellwert ein Schwellwert für die Beschleunigung verwendet, kann dies auf einfache Art und Weise erlauben, für den Körper eines Insassen des Fahrzeugs aus medizinischer Sicht noch als verträglich eingestufte Beschleunigungen als Grenzwerte zu verwenden, ab derer das Auslösen einer Sicherheitseinrichtung erforderlich wird, wohingegen kostenintensive Austäusche oder Reparaturen von Sicherheitseinrichtungen vermieden werden können, wenn der Maximalbeschleunigungswert während der Kollision unterhalb einer gesundheitlich kritischen Schwelle bleibt.

Gemäß einigen Ausführungsbeispielen der vorliegenden Erfindung enthält die Auslösecharakteristik eine Information über eine Auslösestufe, d. h., mittels der Auslösecharakteristik wird eine von zumindest zwei möglichen Auslösecharakteristiken, bzw. von prinzipiell beliebig vielen Auslösecharakteristiken oder Auslösestufen der Sicherheitseinrichtung bewirkt. Das Verwenden der Vorhersagefunktion ermöglicht es somit, adaptive Sicherheitseinrichtungen zu verwenden, die durch Verwenden mehrerer Auslösecharakteristiken bzw. Auslösestufen die negativen Auswirkungen auf einen Insassen bei Aktivierung der Sicherheitseinrichtung minimieren können.

Gemäß einigen Ausführungsbeispielen der vorliegenden Erfindung wird der vorhergesagte zeitliche Verlauf der kinematischen Größe mit einem nach einem Beginn der Kollision bestimmten zeitlichen Verlauf der kinematischen Größe selbst bzw. eines diese kinematische Größe repräsentierenden Messwerts verglichen, um bei einer Übereinstimmung der beiden Größe das Auslösesignal bereitzustellen. Dies kann es ermöglichen, die Auslösesicherheit dahingehend zu erhöhen, dass die Vorhersage zunächst innerhalb eines kürzeren Zeitfensters zu Beginn einer Kollision überprüft wird, bevor nach einer Bestätigung der Vorhersage das Auslösesignal mit der bestimmten Auslösecharakteristik erzeugt bzw. ausgegeben wird. Beobachtungsparameter, aufgrund derer eine Vorhersage des Verlaufs der kinematischen Größe mit einer hohen Präzision möglich sind, sind, ohne Anspruch auf Allgemeinheit, die Anzahl der beteiligten Fahrzeuge, der mögliche Punkt einer Kollision am Fahrzeug, ein möglicher Auftreffwinkel, ein möglicher Auftreffzeitpunkt, eine mögliche Geschwindigkeit des Fahrzeugs sowie die Geschwindigkeiten der potentiellen Kollisionspartner.

Gemäß einigen Ausführungsbeispielen der vorliegenden Erfindung wird die Analysefunktion, die für die Vorhersage des zeitlichen Verlaufs der kinematischen Größe verwendet wird, nach einem Algorithmus bestimmt, der auf einer symbolischen Regression beruht. Eine symbolische Regression beruht dabei darauf, dass nicht notwendigerweise nur die Parameter eines vorbestimmten funktionalen Zusammenhangs mittels einer Regression verändert werden, sondern dass vielmehr die Funktionsvorschrift selbst, die abhängig vom Parameter die Vorhersagefunktion erzeugt, während der Regression verändert und auf das Problem angepasst wird.

Das heißt, zunächst wird eine vorläufige Analysefunktion bereitgestellt, die zumindest von einem freien Parameter abhängt. Basierend auf der Kenntnis eines vorbekannten Kollisionsverlaufs wird ein Beobachtungsparameter derart bereitgestellt, dass dieser den mit der bevorstehenden Kollision des Kraftfahrzeugs in Verbindung stehenden Parameter für den vorbekannten Kollisionsverlauf repräsentiert. Danach wird die Qualität der vorläufigen Analysefunktion bewertet, indem deren Funktionsverlauf bei Verwendung des Beobachtungsparameters als der freie Parameter der vorläufigen Analysefunktion mit einem zeitlichen Verlauf der kinematischen Größe des Fahrzeugs während des vorbekannten Kollisionsverlaufs verglichen wird. Eine weitere vorläufige Analysefunktion wird bereitgestellt bzw. abgeleitet, die ebenfalls von zumindest einem freien Parameter abhängt und sich hinsichtlich zumindest eines funktionalen Zusammenhangs von der vorläufigen Analysefunktion unterscheidet, woraufhin diese ebenfalls nach denselben Kriterien hinsichtlich ihrer Qualität bewertet wird. Danach wird die Qualität der vorläufigen Analysefunktion und der weiteren vorläufigen Analysefunktion miteinander verglichen und diejenige der beiden Funktionen wird verworfen, deren Qualität schlechter ist, sodass für die weitere Iteration des Regressionsalgorithmus als Vergleichsfunktion die bessere Funktion mit der höheren Qualität behalten wird.

Das heißt, gemäß einigen Ausführungsbeispielen der vorliegenden Erfindung wird nicht etwa ein vorbekannter funktionaler Zusammenhang angenommen, sondern die Funktion, die den funktionalen Zusammenhang zwischen Beobachtungsparameter und dem zeitlichen Verlauf der kinematischen Größe des Fahrzeugs während der Kollision beschreibt, wird selbst mittels eines iterativen Verfahrens bestimmt. Die so gewonnene Analysefunktion kann somit einen möglicherweise vorher nicht bekannten physikalischen Zusammenhang zwischen den Beobachtungsgrößen und dem Verlauf der kinematischen Größen des Fahrzeugs offenbaren, auch wenn dieser aufgrund der Komplexität der Zusammenhänge a priori nicht ersichtlich war.

Der Bestimmung einer geeigneten Analysefunktion kann das Verfahren also den Vorteil haben, vertiefende Einblicke in die Wechselwirkungen zwischen einzelnen Parametern der Pre-Crash-Sensorik und des Verlaufs der kinematischen Größen zu gewinnen, was beispielsweise bei Black-Box-Verfahren wie neuronalen Netzen nicht oder nur äußerst bedingt möglich ist. Darüber hinaus kann gemäß den Ausführungsbeispielen der Erfindung durch das Verwenden der symbolischen Regression möglicherweise eine bessere Performance erzielt werden als mit vergleichbaren Verfahren, beispielsweise eine bessere Vorhersagegenauigkeit erzielt werden. Darüber hinaus wird mittels des Verfahrens eine mehr oder weniger komplexe Funktion erzeugt, die aber einen Zusammenhang zwischen den beteiligten physikalischen Größen aufzeigen kann und somit zu einem gewissen Grad interpretierbar ist. Darüber hinaus lassen sich in dem zeitlichen Verlauf der vorhergesagten kinematischen Größe auch Proportionalitäten sowie weitere Gesetzmäßigkeiten, wie beispielsweise Unstetigkeitsstellen durch Auswertung des Funktionsverlaufs identifizieren, die bei der Anwendung der Analysefunktion im Fahrzeug berücksichtigt werden können. Dies kann dazu beitragen, Probleme, die durch Unstetigkeiten in der Vorhersage, wie sie andernfalls im Fahrzeug während des Betriebs auftreten können, zu vermeiden.

Gemäß einigen Ausführungsbeispielen der vorliegenden Erfindung wird die symbolische Regression durchgeführt, indem die vorläufigen miteinander zu vergleichenden Analysefunktionen während der Regression durch Verfahren der genetischen Programmierung erzeugt werden. Dies kann umgesetzt werden, indem die vorläufige Analysefunktion und die davon abgeleiteten weiteren Analysefunktionen alle auf einer vorbestimmten Menge von unterschiedlichen Basisfunktionen basieren, die von jeweils zumindest einem Parameter abhängig sein können. Die vorläufigen Analysefunktionen werden aus der Menge von Basisfunktionen zusammengesetzt und die weiteren während der Regression verwendeten vorläufigen Analysefunktionen werden durch Veränderung der Analysefunktion der vorherigen Iteration gewonnen. Die Verwendung eines klassischen genetischen Algorithmus kann dabei dazu beitragen, in vergleichsweise kurzer Rechenzeit für die Vielzahl von möglichen Parametern bzw. Beobachtungsparametern für ein bestimmtes Fahrzeug eine Analysefunktion zu finden, die den speziellen Anforderungen bei der Entwicklung des betreffenden Fahrzeugs Rechnung trägt. Das heißt, im Gegensatz zu klassischen Regressionsverfahren braucht bei der symbolischen Regression mittels genetischer Programmierung keine grundlegende Formel (beispielsweise ein Polynom, für das nur noch die Koeffizienten bestimmt werden müssen) angenommen werden. Das Verfahren bestimmt das Modell vollständig selbst und kann im Ergebnis auch hoch komplexe nicht-lineare Formeln herleiten, die den Sachverhalt gut widerspiegeln, allein aufgrund von grundsätzlichen physikalischen Überlegungen jedoch nicht herleitbar sind. Das Ergebnis kann eine bessere Vorhersagbarkeit des zeitlichen Verlaufs der kinematischen Größe sein.

Dieses Ergebnis kann auf einfache Art und Weise ohne aufwändige Berechnungen beispielsweise dadurch erzielt werden, dass die weitere vorläufige Analysefunktion durch ein Verändern der vorläufigen Analysefunktion während der Regression bestimmt wird, wobei das Verändern das Entfernen zumindest einer der Basisfunktionen, das Ersetzen zumindest einer Basisfunktion durch zumindest eine weitere Basisfunktion oder das Hinzufügen zumindest einer weiteren Basisfunktion umfasst.

Nachfolgend werden unter Bezugnahme auf die beigefügten Figuren Ausführungsbeispiele näher beschrieben und erläutert.
- Fig. 1: zeigt ein Ausführungsbeispiel einer Vorrichtung zum Bereitstellen einer Auslösecharakteristik für ein Auslösesignal in einem Fahrzeug;
- Fig. 2: zeigt zwei Beispiele für mögliche Vorhersagefunktionen für den zeitlichen Verlauf einer kinematischen Größe eines Fahrzeugs während der Kollision;
- Fig. 3: zeigt schematisch in einem Blockdiagramm ein Ausführungsbeispiel eines Verfahrens zum Bereitstellen einer Auslösecharakteristik für ein Auslösesignal;
- Fig. 4: zeigt schematisch in einem Flussdiagramm ein Ausführungsbeispiel eines Verfahrens zum Bereitstellen einer einen zeitlichen Verlauf einer kinematischen Größe eines Fahrzeugs während einer Kollision beschreibenden Analysefunktion;
- Fig. 5: zeigt schematisch, wie basierend auf einer vorbestimmten Menge von Basisfunktionen eine vorläufige Analysefunktion erzeugt werden kann;
- Fig. 6: zeigt ein Beispiel, wie mittels genetischer Programmierung durch Veränderung einer vorläufigen Analysefunktion eine weitere vorläufige Analysefunktion erhalten werden kann;und

- Fig. 7: zeigt ein weiteres Beispiel, wie mittels genetischer Programmierung aus einer vorläufigen Analysefunktion in einem Iterationsschritt eines Regressionsverfahrens eine weitere vorläufige Analysefunktion erhalten werden kann.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

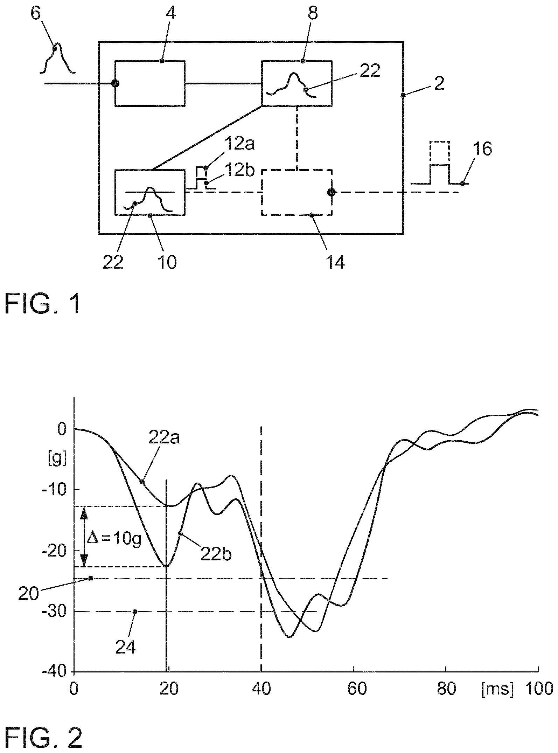

Fig. 1 zeigt in schematischer Ansicht ein Ausführungsbeispiel einer Vorrichtung zum Bereitstellen einer Auslösecharakteristik 2, welche eine Eingabeschnittstelle 4 umfasst, die dem Empfangen zumindest eines Beobachtungsparameters 6 dient, der einen mit einer bevorstehenden Kollision des Kraftfahrzeugs in Verbindung stehenden Parameter repräsentiert. Wie in Fig. 1 schematisch angedeutet, kann der Beobachtungsparameter ein Parameter sein, der von einer Pre-Crash-Sensorik beispielsweise direkt beobachtet oder ausgegeben wird, der also einen Zustand bzw. einen Parameter, eine Umgebungsvariable oder eine physikalische Größe des Fahrzeugs oder in der Umgebung des Fahrzeugs beschreibt, die mit einer bevorstehenden Kollision in irgendeiner Art und Weise kausal in Verbindung steht. Dies kann beispielsweise ein zeitlich veränderlicher Abstand zwischen dem Fahrzeug und einem Hindernis sein, eine Geschwindigkeit des Fahrzeugs selbst, eine Relativgeschwindigkeit zwischen dem Fahrzeug und einem möglicherweise kollidierenden Gegenstand oder jedwede andere diesbezügliche physikalische Größe oder eine von einer solchen oder einer ähnlichen physikalischen Größe abgeleitete Größe.

Die Vorhersageeinrichtung 8 stellt, basierend auf dem Beobachtungsparameter 6 oder auf dessen zeitlichen Verlauf, eine einen zeitlichen Verlauf zumindest einer kinematischen Größe des Fahrzeugs während einer Kollision beschreibende Vorhersagefunktion 22 bereit, wobei dieses Bereitstellen auf dem Auswerten einer Analysefunktion unter Verwendung des Beobachtungsparameters als ein Parameter der Analysefunktion basiert. Das heißt, beispielsweise wird ein zeitlicher Verlauf eines Beobachtungsparametes als ein freier Parameter einer vorher bestimmten Analysefunktion verwendet, sodass sich durch das bloße Einsetzen des Beobachtungsparameters eine Vorhersage eines zeitlichen Verlaufs zumindest einer kinematischen Größe des Fahrzeugs ergibt. Bei manchen Ausführungsbeispielen kann die Analysefunktion beispielsweise per se von der Zeit abhängen, sodass sich der zeitliche Verlauf der Vorhersagefunktion nicht allein aus einem zeitlichen Verlauf eines Beobachtungsparameters 6 ergibt, sondern in Kombination mit dem zeitlichen Verlauf bzw. der zeitlichen Parametrisierung der Analysefunktion.

Die Vorrichtung 2 enthält ferner eine Bewertungseinrichtung 10, die ausgebildet ist, um bei Vorhandensein einer vorbestimmten Charakteristik in der Vorhersagefunktion 22 die Auslösecharakteristik 121, b bereitzustellen. Das heißt, wenn beispielsweise ein Maximalwert der vorhergesagten kinematischen Größe in dem vorhergesagten zeitlichen Verlauf derselben überschritten oder unterschritten wird, kann als Charakteristik beispielsweise ein Kommando für eine Auslösung als solches bereitgestellt werden. Allgemein ist als Charakteristik für ein Auslösesignal jedwede Größe zu verstehen, die das Auslösen einer Sicherheitseinrichtung beeinflusst, sei es zeitlich oder im Hinblick auf die Stärke der Auslösung der Sicherheitseinrichtung, um nur zwei Beispiele zu nennen. Das heißt, beispielsweise kann die Auslösecharakteristik eine Information über eine Auslösestufe enthalten, die einer Auswahl einer von zumindest zwei Auslösecharakteristiken oder Auslösestufen der Sicherheitseinrichtung bewirkt, wie in Fig. 1 schematisch durch zwei unterschiedliche Level für die Auslösecharakteristik 12a und 12b angedeutet ist.

Fig. 1 zeigt ferner eine optionale Evaluierungseinrichtung 14, die ausgebildet ist, um den vorhergesagten zeitlichen Verlauf der kinematischen Größe von der Vorhersageeinrichtung 8, mit einem nach einem Beginn der Kollision bestimmten zeitlichen Verlauf eines die kinematische Größe direkt oder indirekt repräsentierenden Messwerts zu vergleichen, um erst bei einer Übereinstimmung der beiden Größen das Auslösesignal 16 bereitzustellen, das die von der Bewertungseinrichtung 10 bereitgestellte Auslösecharakteristik 12a,b repräsentiert. Lediglich exemplarisch ist hier ein Auslösesignal 16 mit zwei möglichen unterschiedlichen Signalhöhen gezeigt. Selbstverständlich kann ein solches Auslösesignal auf beliebige Art und Weise analog oder digital repräsentiert oder übertragen werden. Ebenso ist das Bestimmen der Übereinstimmung zwischen der Vorhersagefunktion und dem bestimmten zeitlichen Verlauf des den kinematischen Größe repräsentierenden Messwerts nach Beginn der Kollision durch jedwedes bekannte Verfahren, beispielsweise durch Verwenden einer Korrelationsfunktion, das Bestimmen eines minimalen quadratischen Fehlers, oder dergleichen, möglich.

Fig. 2 zeigt lediglich exemplarisch als Beispiel zwei vorhergesagte zeitliche Verläufe eines Beschleunigungsverlaufs 22a und 22b des Fahrzeugs während einer Kollision, d.h. als kinematische Größe ist die Beschleunigung gewählt. Auf der x-Achse ist in Einheiten von ms die Zeit nach Beginn der Kollision aufgetragen und auf der y-Achse die Beschleunigung des Fahrzeugs in Einheiten der Erdbeschleunigung g, die bei einer Kollision negativ ist und die unmittelbar auf den Fahrer einwirkt.

Wie in Fig. 2 dargestellt, ist es mit den Ausführungsbeispielen der vorliegenden Erfindung möglich, stetige Funktionen bzw. stetige zeitliche Verläufe der kinematischen Größe, beispielsweise der Beschleunigung, während der Kollision vorherzusagen.

Dies ermöglicht es mit nahezu beliebiger zeitlicher Auflösung eine vorbestimmte Charakteristik in der Vorhersagefunktion zu identifizieren. Lediglich als ein einfaches Beispiel ist als vorbestimmte Charakteristik in Fig. 2 eine nicht mehr tolerierbare maximale Beschleunigung 20 bei etwa -25 g eingezeichnet, bei deren Unterschreiten, das für beide Vorhersagefunktionen 22a und 22b in etwa bei einer Zeit von 40 ms nach Beginn der Kollision auftritt, ein Auslösesignal für ein Airbag erzeugt wird. Das Auslösesignal selbst wird jedoch früher erzeugt, wie bereits beschrieben. Gemäß den Ausführungsbeispielen der vorliegenden Erfindung ist es somit ohne Weiteres auch möglich, eine adaptive Auslösung einer Sicherheitseinrichtung zu gewährleisten, auch wenn die diesbezüglichen Bedingungen erst deutlich nach einem für die Auslösung der Sicherheitseinrichtung typischerweise zur Verfügung stehenden Zeitfenster von 10 bis 20 ms eintreten.

Beispielsweise kann eine weitere vorbestimmte Charakteristik berücksichtigt werden, die vorliegend als weitere Schwelle einer maximalen Beschleunigung 24 bei ca. -30 g veranschaulicht ist. Gemäß einigen Ausführungsbeispielen kann somit beispielsweise ein stärkeres Zünden eines Airbags ausgelöst werden, wenn die Schwelle 24 in der Vorhersagefunktion unterschritten wird, obwohl dies nach klassischen Verfahren überhaupt erst möglich wäre, wenn die maximale Beschleunigung durchlaufen ist, was jedoch zu einem Zeitpunkt der Fall ist, an dem die Zündung des Airbags schon erfolgt sein muss.

Das heißt, mittels Ausführungsbeispielen der vorliegenden Erfindung können adaptive Rückhaltesysteme bzw. Sicherheitseinrichtungen zuverlässig betrieben werden, die sogar in mehr als zwei Stufen auslösen können. Dies kann den Vorteil haben, dass bei einem nachgewiesenen Crash bzw. einer nachgewiesenen Kollision die Sicherheitseinrichtungen nicht von vornherein mit maximaler Schwere auslösen müssen, was den Insassen schonen kann. Zusammengefasst wird der Crashpuls bzw. der zeitliche Verlauf zumindest einer kinematischen Größe des Fahrzeugs während einer Kollision als Funktion beschrieben bzw. vorhergesagt. Basierend auf dieser Vorhersage wird im Fahrzeug während des Betriebs ein Beobachtungsparameter in eine Analysefunktion übernommen, um aus der so evaluierten Analysefunktion eine Vorhersagefunktion bzw. eine Vorhersage für die kinematische Variable während der Kollision zu gewinnen. Als mögliche Beobachtungsparameter kommen hierbei beispielsweise die beteiligten Fahrzeuge, die Geschwindigkeiten, die Trefferlagen, der Winkel, die Zeit und beliebige andere Parameter in Betracht. Dadurch kann der Einfluss der Parameter auf den Crashpuls herausgearbeitet werden. Die beispielsweise mittels einer Regression hergeleitete Funktion, die das Strukturverhalten des Fahrzeugs im Kollisionsfall beschreibt, also die Analysefunktion, erlaubt es, in Abhängigkeit von Unfallparametern einen Crashpuls vorherzusagen. Der Beobachtungsparameter kann dabei beispielsweise auf vorausschauender Sensorik, bzw. auf Pre-Crash-Sensorik beruhen, wie beispielsweise auf Beobachtungen von Kameras, Radar, Laserscannern usw.

Durch das Verfahren bzw. die Ausführungsbeispiele der Erfindung wird also nicht lediglich ein einziger Wert sondern ein Werteverlauf vorhergesagt, wodurch deutlich detailliertere und diffizilere Berechnungsverfahren ermöglicht werden, um Auslösecharakteristiken zu bestimmen. Bei Verwendung von einer Beschleunigung bzw. einer Geschwindigkeit als vorhergesagter kinematischer Größe des Fahrzeugs während der Kollision kann dabei beispielsweise die Weiterverarbeitung der Vorhersagefunktion direkt durch ein Airbagsteuergerät erfolgen, welches üblicherweise ebenfalls auf Segmenten bzw. Abschnitten eines Beschleunigungs-Zeitverlaufes arbeitet, auch wenn diese bei herkömmlichen Verfahren üblicherweise kürzer sind. Darüber hinaus können, abseits von der Beschleunigung, aus dem vorhergesagten Verlauf der kinematischen Größe beispielsweise auch Geschwindigkeitsdifferenzen oder beliebige andere Unfallschweremaße leicht hergeleitet werden. Mit anderen Worten kann durch einige Ausführungsbeispiele der vorliegenden Erfindung ein Crashpuls, wie er in Fig. 2 dargestellt ist, bereits vor der Kollision vorhergesagt werden. Dies kann es ermöglichen, Sicherheitssysteme bzw. Sicherheitseinrichtungen zu verwenden, die bereits vor der Kollision entscheidende Gegenmaßnahmen einleiten oder zumindest Entscheidungen treffen können, die eine Verletzungswahrscheinlichkeit der Insassen senken kann. Im Vergleich zu Systemen, die vorkollisionär Aussagen über die Schwere in Form eines einzigen zeitunabhängigen Parameters treffen, beispielsweise als einfache Geschwindigkeitsdifferenzen, erlaubt die höhere Aussagekraft adaptives reagieren. Wesentlich aussagekräftiger ist beispielsweise die Bestimmung des zu erwartenden Crashpulses bzw. eines zu erwartenden zeitlichen Verlaufs einer kinematischen Größe des Fahrzeugs während der Kollision, der sich auch leichter durch die bereits vorhandene Rechenhardware im Fahrzeug verarbeiten lässt. Dazu können, beispielsweise mit Hilfe von vorausschauender Sensorik, ein oder mehrere relevante Unfallparameter erfasst und einer Funktion übergeben werden, die anschließend beispielsweise den Beschleunigungs-Zeit-Verlauf während der Kollision als Vorhersagefunktion bestimmt. Dieser Verlauf kann vom Airbagsteuergerät leicht ausgewertet werden, da dieses üblicherweise auch auf Crashpulsen bzw. zeitlichen Verläufen einer Beschleunigung arbeitet, wobei diese bei herkömmlichen Systemen erst während der Kollision erfasst werden.

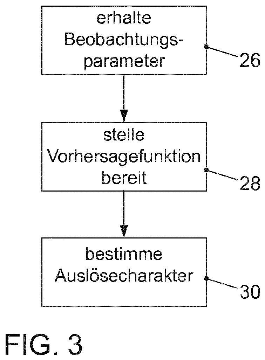

Fig. 3 beschreibt erneut schematisch in Form eines Flussdiagramms ein Ausführungsbeispiel eines Verfahrens zum Bereitstellen einer Auslösecharakteristik.

In einem Beobachtungsschritt 26 wird zumindest ein Beobachtungsparameter erhalten, der einen mit einer bevorstehenden Kollision des Kraftfahrzeugs in Verbindung stehenden Parameter repräsentiert.

Bei einem Vorhersageschritt 28 wird eine Vorhersagefunktion bereitgestellt, die einen zeitlichen Verlauf zumindest einer kinematischen Größe des Fahrzeugs während der Kollision beschreibt und in einem Charakterisierungsschritt 30 wird eine Auslösecharakteristik bei einem Vorhandensein einer vorbestimmten Charakteristik in der Vorhersagefunktion bereitgestellt.

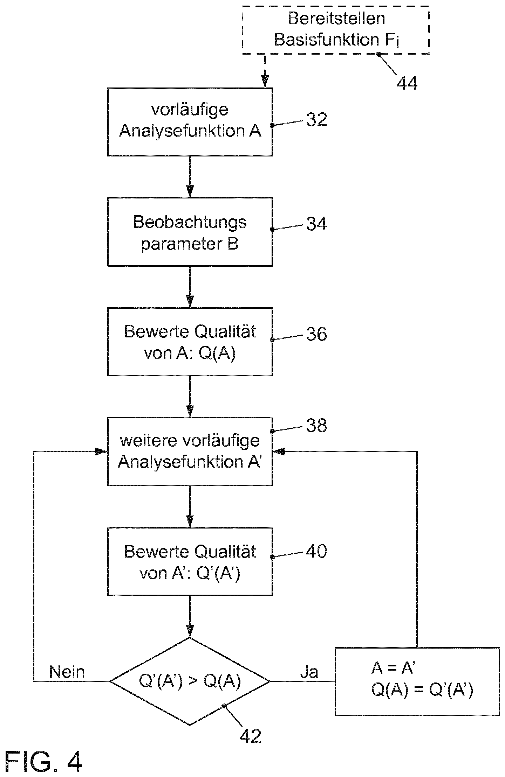

Anhand der Fig. 4 bis 7 wird nachfolgend schematisch anhand eines Flussdiagramms und mehrerer Baumdiagramme beschrieben, wie eine Analysefunktion bereitgestellt bzw. erhalten werden kann, die einen zeitlichen Verlauf einer kinematischen Größe eines Fahrzeugs während einer Kollision in Abhängigkeit von zumindest einem Beobachtungsparameter beschreibt, der einen mit einer bevorstehenden Kollision des Kraftfahrzeugs in Verbindung stehenden bzw. kausal zusammenhängenden Parameter repräsentiert.

Gemäß dem in Fig. 4 gezeigten Ausführungsbeispiel der vorliegenden Erfindung wird dies mittels einer symbolischen Regression erreicht. Dazu wird zunächst beim Start des Verfahrens in einem ersten Bereitstellungsschritt 32 eine vorläufige Analysefunktion A bereitgestellt, die einen Kandidat bzw. eine mögliche endgültige Analysefunktion darstellt, die mit dem Verfahren gefunden werden soll.

Zusätzlich wird in einem weiteren Charakterisierungsschritt ein Beobachtungsparameter B bereitgestellt, der den mit der bevorstehenden Kollision des Kraftfahrzeugs in Verbindung stehenden Parameter für einen vorbekannten Kollisionsverlauf repräsentiert. Das heißt, der Beobachtungsparameter B, aufgrund dessen die Analysefunktion eine Vorhersagefunktion für den Verlauf des zeitlichen Parameters bestimmen soll, ist für die der Untersuchung zugrunde liegende Kollision vorbekannt. Dies kann beispielsweise durch Simulation eines Unfalls bzw. einer Kollision oder durch Auswertung von während eines realen Crashtests erhaltenen Parameterverläufen gewährleistet werden.

In einem ersten Qualitätsbewertungsschritt 36 wird die Qualität Q der vorläufigen Analysefunktion A bewertet, indem deren Funktionsverlauf bei Verwendung des Beobachtungsparameters B als freier Parameter der vorläufigen Analysefunktion A mit einem vorbekannten zeitlichen Verlauf der vorhergesagten kinematischen Größe des Fahrzeugs während des vorbekannten Kollisionsverlaufs verglichen wird. Das heißt, aus den oben angesprochenen Versuchen bzw. Simulationen ist auch der Verlauf der kinematischen Größe bekannt, die mittels der Analysefunktion vorhergesagt werden soll, sodass die Vorhersage mit dem tatsächlich auftretenden zeitlichen Verlauf der kinematischen Größe verglichen werden kann. In einem weiteren Bereitstellungsschritt 38 wird eine weitere vorläufige Analysefunktion A' bereitgestellt, die ebenfalls von zumindest einem freien Parameter abhängt und sich hinsichtlich zumindest eines funktionalen Zusammenhangs von der vorläufigen Analysefunktion A unterscheidet. In einem weiteren Bewertungsschritt 40 wird die Qualität Q' der weiteren vorläufigen Analysefunktion A' ebenso wie die Qualität der weiteren Analysefunktion A bewertet, um in einem Entscheidungsschritt 42 die Qualitäten Q und Q' der beiden Analysefunktionen miteinander vergleichen zu können.

Wenn die Qualität der weiteren vorläufigen Analysefunktion A' nach der verwendeten Metrik besser ist als diejenige der vorläufigen Analysefunktion A, wird die vorläufige Analysefunktion A verworfen wird. Das heißt, für einen weiteren Vergleich wird die weitere vorläufige Analysefunktion A' als Analysefunktion verwendet und deren Qualitätswert Q' wird als Vergleichskriterium verwendet. Daraufhin wird erneut eine weitere Analysefunktion A' bereitgestellt bzw. bestimmt, um so den iterativen Algorithmus fortzuführen, bis dieser nach Erreichen eines vorbestimmten Konvergenzkriteriums die Bestimmung der Analysefunktion beendet und diese zum Ergebnis hat.

Im Gegensatz zu klassischen Regressionsverfahren kann bei der symbolischen Regression das zugrunde liegende Modell vollständig selbst bestimmt werden, und dies kann auch zu nicht vorhersehbaren komplexen nicht-linearen Formen führen. Im Gegensatz zu klassischen Verfahren, wie polynominaler Regression oder der Verwendung von neuronalen Netzen, kann die symbolische Regression so beispielsweise genutzt werden, um für die üblicherweise auftretenden komplexen Konstellationen eine die Zusammenhänge beschreibende Funktion herzuleiten, für die die klassische Herleitung einer Funktion über zugrunde liegende physikalische Gesetzmäßigkeiten aufgrund der hohen Komplexität üblicherweise versagt. Diese kann im tatsächlichen Betrieb im Fahrzeug leicht evaluiert und nach beliebigen Kriterien ausgewertet werden.

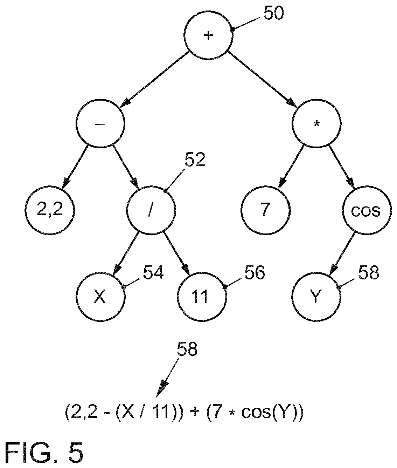

Anhand der Fig. 5 bis 7 wird nachfolgend eine besondere Möglichkeit kurz beschrieben, wie, basierend auf einer vorläufigen Analysefunktion A eine weitere vorläufige Analysefunktion A' bereitgestellt werden kann, nämlich basierend auf genetischen Algorithmen, die auf dem Austauschen von einzelnen Komponenten bzw. der Mutation einzelner Komponenten einer Funktion in Anlehnung an die Darwinsche Evolutionstheorie basieren.

Bei der auf evolutionärer Veränderung der Analysefunktionen basierenden symbolischen Regression wird zu Beginn des Verfahrens eine unterschiedliche Menge von vorbestimmten Basisfunktionen bereitgestellt, wie dies auch in Fig. 4 in dem optionalen Initialisierungsschritt 44 dargestellt ist.

Die Menge von Basisfunktionen Fᵢ wird während des Algorithmus dazu verwendet, Kandidaten für Analysefunktionen zu erzeugen. Fig. 5 zeigt dabei beispielsweise eine Möglichkeit, wie basierend auf einer Baumstruktur eine vorläufige Analysefunktion so repräsentiert werden kann, dass sie durch der Evolution verwandte genetische Mutationen während der Regression verändert werden kann. Bei dem in Fig. 5 gezeigten Beispiel sind die Basisfunktionen zumindest die Grundrechenarten +, -, /, * sowie die Kosinusfunktion. Darüber hinaus kann als Basisfunktion in diesem Sinne selbstverständlich jedweder konstanter Parameter bzw. jedwede konstante Zahl verstanden werden, sowie jedwede andere Funktion, die von einem Parameter abhängig ist oder sein kann. Allgemein kann das Erzeugen einer vorläufigen Analysefunktion beispielsweise als Erstellen einer Linearkombination der Basisfunktionen, von freien Parametern und konstanten Termen charakterisiert werden.

Durch die in Fig. 5 lediglich als Beispiel gewählte Darstellung wird von der Baumstruktur die Funktion 2,2 - (X / 11) + (7 * cos(Y)) repräsentiert, wie sich leicht einsehen lässt, folgt man den Ästen des Baumes von unten nach oben, wobei jeder Knoten zwei funktional miteinander verbundene Parameter oder Knoten miteinander verknüpft. Beispielsweise ergeben sich so aus dem die Grundrechtenarten der Division repräsentierenden Knoten 52 und dem freien Parameter 54 (X) sowie dem konstanten Parameter 11 bei Beachtung der Notation, dass der Baum von unten nach oben und von links nach rechts zu lesen ist, am Knoten 52 der Ausdruck X / 11 in der in Fig. 5 dargestellten Formel.

Ohne Beschränkung der Allgemeinheit weist die durch den Baum der Fig. 5 repräsentierte Analysefunktion zwei freie Parameter, nämlich X und Y, auf. Es versteht sich von selbst, dass bei weiteren Ausführungsbeispielen lediglich ein freier Parameter oder eine beliebige weitere Anzahl von freien Parametern verwendet werden kann. Ein weiterer Parameter, der in einer Analysefunktion verwendet werden kann, ist beispielsweise die Zeit, sodass sich auch bei Einsetzen eines festen zeitinvarianten Parameters in einen der freien Parameter 54 oder 58 bei der in Fig. 5 gezeigten Analysefunktion eine zeitliche Entwicklung ergäbe. Dabei versteht es sich von selbst, dass als Basisfunktionen Fᵢ im Sinne von weiteren Ausführungsbeispielen der Erfindung beliebige weitere auch komplexere Funktionen verwendet werden können, beispielsweise Logarithmen, Exponentialfunktionen, Potenzen oder dergleichen.

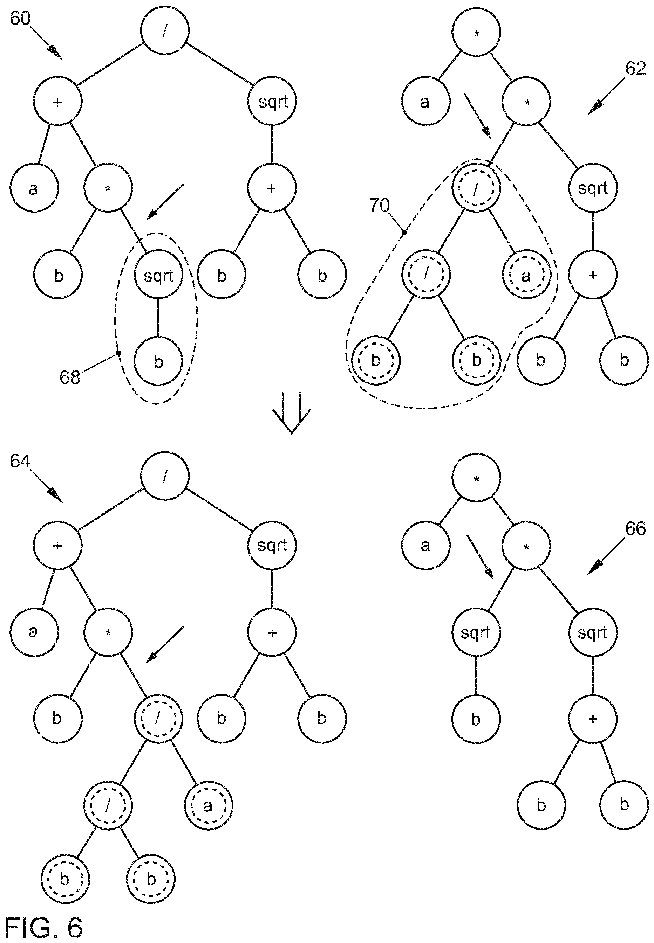

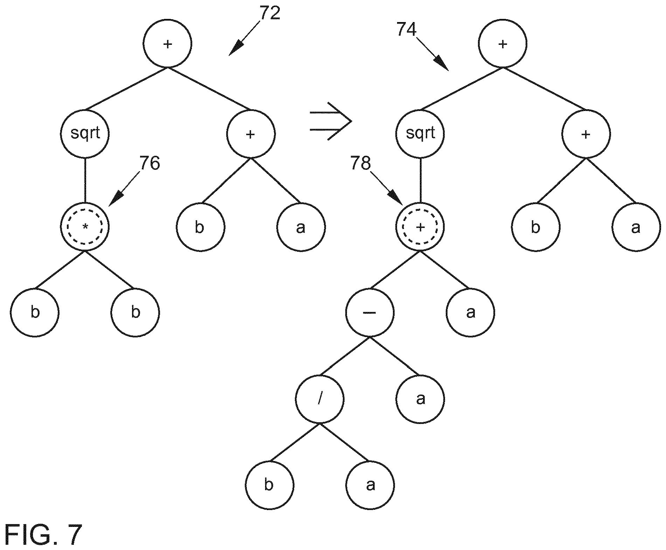

Mittels der so gewählten Darstellung kann eine Variation der vorläufigen Analysefunktionen basierend auf der genetischen Mutation verwandten Konzepten erfolgen, wie beispielsweise anhand der Fig. 6 und 7 illustriert wird. Fig. 6 illustriert dabei graphisch das Konzept der Kreuzung, bei dem basierend auf einer ersten vorläufigen Analysefunktion 60 und einer zweiten vorläufigen Analysefunktion 62 eine dritte vorläufige Analysefunktion 64 und eine vierte vorläufige Analysefunktion 66 bestimmt bzw. bereitgestellt werden, indem während des Schrittes des Bereitstellens einer weiteren vorläufigen Analysefunktion, die im vorliegenden Beispiel eine der vorläufigen Analysefunktionen 64 und 66 sein könnte, eine Kreuzung zwischen den Funktionen 60 und 62 vorgenommen wird. Insbesondere wird ein erster Funktionsteil bzw. Funktionsblock 68 der ersten vorläufigen Analysefunktion 60 mit einem zweiten Funktionsteil 70 der zweiten vorläufigen Analysefunktion 62 vertauscht, wie in Fig. 6 dargestellt wird.

Fig. 7 zeigt ein ergänzend oder alternativ anwendbares Konzept als Beispiel, nämlich das Konzept der Mutation, wo aus einer ersten vorläufigen Analysefunktion 72 eine zweite vorläufige Analysefunktion 74 erhalten wird, indem eine der Basisfunktionen 76 im selben Knoten innerhalb der Baumstruktur in eine andere Basisfunktion 78 verändert wird. Wenngleich in Fig. 7 zusätzlich zu der Mutation der Basisfunktion des ausgewählten Knotens weitere Knoten zugefügt werden, ist das generische Konzept der Mutation durch die Veränderung der Basisfunktionen in dem betreffenden Knoten gegeben.

Gemäß einigen Ausführungsbeispielen der vorliegenden Erfindung wird also die Analysefunktion gemäß dem Konzept der symbolischen Regression mittels der genetischen Programmierung bestimmt. Das Verfahren kann dabei beispielsweise Eingabedaten mit zugehörigen Ausgabedaten verwenden, die mit der Kollision eines Kraftfahrzeugs im Zusammenhang stehen. Das heißt, beispielsweise Unfallparameter (Anzahl der Fahrzeuge, Geschwindigkeiten, Trefferlagen, Zeit, Winkel usw.) sowie die zugehörigen Crashpulse bzw. die zugehörigen zeitlichen Verläufe der kinematischen Größen während der Kollision.

Darüber hinaus wird eine Fitness- bzw. Qualitätsfunktion verwendet, die die Qualität von gefundenen Lösungen bzw. von vorläufigen Analysefunktionen bewertet, wie beispielsweise die Summe der quadratischen Abstände zwischen Abtastpunkten des realen und des vorhergesagten Crashpulses bzw. des vorhergesagten zeitlichen Verlaufs der kinematischen Größe. Ferner wird eine Menge von Funktionsbausteinen, beispielsweise die Grundrechenarten, Logarithmen, trigonometrische Funktion, etc. verwendet. Allgemein können als solche Funktionsbausteine bzw. Basisfunktionen beliebige mathematische Funktionsvorschriften verwendet werden.

Der Algorithmus zum Bestimmen der Analysefunktion, die den Crashpuls bzw. den zeitlichen Verlauf der kinematischen Größe beschreibt, berechnet zur Initialisierung möglicherweise mehrere Beispiellösungen. Dazu werden die Funktionsbausteine zufällig miteinander zu komplexeren Funktionen kombiniert, bis n verschiedene Funktionen erzeugt wurden. Gemäß einigen Ausführungsbeispielen führt der Algorithmus wiederkehrend folgende Schritte aus. Jede Funktion wird mit der Fitnessfunktion auf Basis der Ein- und Ausgabedaten bewertet. Es besteht somit für jede Funktion eine Qualitätsaussage, wie gut diese Funktion die Eingabedaten auf die Ausgabedaten abbildet. Unter Berücksichtigung der Qualität werden aus n verschiedenen Funktionen n neue Funktionen bestimmt. Dazu werden Therme zwischen zwei Funktionen (Eltern) miteinander gekreuzt und möglicherweise zusätzlich oder ausschließlich leicht mutiert, indem etwa Konstanten verändert oder einzelne Funktionsbausteine ausgetauscht werden. Daraus entsteht jeweils eine neue Funktion (ein Kind).

Zusätzlich werden die besten, bekannten Funktionen direkt übernommen. Die neu erzeugten Funktionen sowie die übernommenen Funktionen werden gespeichert, danach wird mit dem Beginn des Algorithmus erneut gestartet.

Mit anderen Worten realisiert der Algorithmus die Ideen der Darwinschen Evolutionstheorie, indem er Programme lernt, die mit steigender Rechenzeit die Eingabedaten immer besser auf die Ausgabedaten abbilden können. Intern können die erzeugten Programme dabei als die in den Fig. 6 und 7 gezeigten Bäume gespeichert werden. Das Kreuzen der Programme basiert dabei auf einer zufälligen Kombination von Baumästen der zwei Elternteile, während die Mutation einzelne Knoten durch einen anderen Knoten oder einen Teilbaum ersetzt. Die Ausgabe des kinematischen Algorithmus ist am Ende eine Formel für die Analysefunktion, die den Zusammenhang zwischen den Eingabegrößen und der Ausgabegröße, also zwischen zumindest einem Beobachtungsparameter und zumindest einem zeitlichen Verlauf einer kinematischen Größe des Fahrzeugs während einer Kollision darstellt. Diese Funktion kann beispielsweise leicht von anderer Software weiterverarbeitet werden. Durch das Verwenden der genetischen Programmierung in Verbindung mit der symbolischen Regression können darüber hinaus möglicherweise auch neue physikalische Zusammenhänge zwischen den verknüpften Größen, also zwischen den Eingabeparametern und den Ausgabeparametern erkannt werden, was bei weiterer Analyse dazu verwendet werden kann, neue für eine Kollision eines Fahrzeugs relevante Zusammenhänge zu erkennen.

Durch die Ausführungsbeispiele der vorliegenden Erfindung kann ein aussagekräftigerer Crashpuls, d. h. eine gute Abhängigkeit eines zeitlichen Verlaufs einer kinematischen Größe, von einem Beobachtungsparameter dargestellt werden. Die so gewonnene Vorhersagefunktion kann direkt von vorhandener Hard- und/ oder Software genutzt werden, anstatt eine komplizierte und fehleranfällige Fusion der Unfallschwere mit einem möglicherweise direkt beobachteten realen Beschleunigungsverlauf realisieren. Zu müssen Ferner ist eine bessere Adaptivität von Rückhaltesystemen bzw. Sicherheitseinrichtungen möglich, da die Vorhersagefunktion mehr Informationen enthält und zeitlich höher aufgelöst ist. Aus der Vorhersagefunktion lassen sich je nach gewünschter Anwendung viele verschiedene Unfallschweremaße leicht extrahieren. Stammen die Ein- und Ausgabedaten während der Regression von demselben Fahrzeug, lassen sich genauere, fahrzeugspezifische Aussagen über den Zusammenhang der Unfallparameter treffen.

Wenngleich in den vorhergehenden Ausführungsbeispielen die Analysefunktion anhand der klassischen kinematischen Programmierung gewonnen wurde, kann die Analysefunktion in weiteren Ausführungsbeispielen auch auf andere Art und Weise variiert werden. Insbesondere beispielsweise können andere Verfahren der kinematischen Programmierung, wie etwa Gene Expression Programming (GEP), Cartesian Genetic Programming (CGP) oder eine klassische Regression mittels einer vorgegebenen Funktion, deren optimale Koeffizienten gefunden werden, verwendet werden. Ebenfalls können unter gewissen Randbedingungen auch neuronale Netze zur Regression eingesetzt werden. Eine weitere alternative Möglichkeit ist die Support Vector Regression, ein Verfahren, das auf der Separation von Daten in einem Hyperraum basiert.

## Patentansprüche

1. Vorrichtung (2) zum Bereitstellen einer Auslösecharakteristik (12a, b) für ein Auslösesignal (16), welches ein die Auslösecharakteristik (12a, b) berücksichtigendes Auslösen einer Sicherheitseinrichtung in einem Kraftfahrzeug bewirkt, umfassend:
eine Eingabeschnittstelle (4) zum Empfangen zumindest eines Beobachtungsparameters (6), der einen mit einer bevorstehenden Kollision des Kraftfahrzeugs in Verbindung stehenden Parameter repräsentiert;
eine Vorhersageeinrichtung (8) zum Bereitstellen einer einen zeitlichen Verlauf zumindest einer kinematischen Größe des Fahrzeugs während einer Kollision beschreibenden Vorhersagefunktion (22, 22a, 22b), wobei das Bereitstellen der Vorhersagefunktion (22, 22a, 22b) das Auswerten einer stetigen Analysefunktion unter Verwendung des Beobachtungsparameters (6) als ein Parameter der Analysefunktion umfasst, wobei die Analysefunktion eine analytische Funktion ist; und
einer Bewertungseinrichtung (10), die ausgebildet ist, um bei Vorhandensein einer vorbestimmten Charakteristik in der Vorhersagefunktion (22, 22a, 22b) die Auslösecharakteristik (12a, b) bereit zu stellen.

2. Vorrichtung nach Anspruch 1, bei der die vorbestimmte Charakteristik das Überschreiten einer vorbestimmten Maximalbeschleunigung oder das Überschreiten einer vorbestimmten maximalen mittleren Beschleunigung ist.

3. Vorrichtung nach einem der vorhergehenden Ansprüche, bei der die Auslösecharakteristik (12a, b) eine Information über eine Auslösestufe enthält, die eine Auswahl einer von zumindest zwei möglichen Auslösecharakteristiken (12a, b) oder Auslösestufen der Sicherheitseinrichtung bewirkt.

4. Vorrichtung nach einem der vorhergehenden Ansprüche, die ferner eine Evaluierungseinrichtung aufweist, die ausgebildet ist, um den vorhergesagten zeitlichen Verlauf der kinematischen Größe mit einem nach einem Beginn der Kollision bestimmten zeitlichen Verlauf eines die kinematischen Größe repräsentierenden Messwertes zu vergleichen, um bei einer Übereinstimmung der beiden Größen das Auslösesignal bereit zu stellen.

5. Vorrichtung nach einem der vorhergehenden Ansprüche, die ferner eine Ausgabeschnittstelle aufweist, die ausgebildet ist, um das Auslösesignal an eine mit der Ausgabeschnittstelle verbundene Sicherheitseinrichtung, insbesondere einen Airbag oder einen Gurtstraffer auszugeben, sodass das Auslösesignal ein Auslösen der Sicherheitseinrichtung bewirkt.

6. Vorrichtung nach einem der vorhergehenden Ansprüche, bei der die Vorhersagefunktion (22, 22a, 22b) einer Vielzahl von aufeinanderfolgenden Zeitpunkten jeweils einen Wert für die kinematische Größe des Fahrzeugs zuweist.

7. Vorrichtung nach einem der vorhergehenden Ansprüche, bei der der zumindest eine Beobachtungsparameter (6) zumindest einen der Parameter aus der Gruppe mögliche an einer Kollision beteiligte Fahrzeuge, möglicher Punkt einer Kollision am Fahrzeug, möglicher Auftreffwinkel, möglicher Auftreffzeitpunkt, mögliche Geschwindigkeit des Fahrzeugs und mögliche Geschwindigkeit eines Kollisionspartners repräsentiert.

8. Verfahren zum Bereitstellen einer Auslösecharakteristik (12a, b) für ein Auslösesignal, welches ein Auslösen einer Sicherheitseinrichtung in einem Kraftfahrzeug bewirkt, umfassend:
Empfangen zumindest eines Beobachtungsparameters (6), der einen mit einer bevorstehenden Kollision des Kraftfahrzeugs in Verbindung stehenden Parameter repräsentiert;
Bereitstellen einer einen zeitlichen Verlauf zumindest einer kinematischen Größe des Fahrzeugs während einer Kollision beschreibenden Vorhersagefunktion (22, 22a, 22b), wobei das Bereitstellen der Vorhersagefunktion (22, 22a, 22b) das Auswerten einer stetigen Analysefunktion unter Verwendung des Beobachtungsparameters (6) als ein Parameter der Analysefunktion umfasst, wobei als Analysefunktion eine analytische Funktion verwendet wird; und
Bereitstellen der Auslösecharakteristik (12a, b) bei einem Vorhandensein einer vorbestimmten Charakteristik in der Vorhersagefunktion (22, 22a, 22b).

9. Verfahren zum Bereitstellen einer einen zeitlichen Verlauf einer kinematischen Größe eines Fahrzeugs während einer Kollision beschreibenden Analysefunktion in Abhängigkeit von zumindest einem Beobachtungsparameter (6), der einen mit einer bevorstehenden Kollision des Kraftfahrzeugs in Verbindung stehenden Parameter repräsentiert, umfassend:
Bereitstellen (32) einer vorläufigen Analysefunktion, die zumindest von einem freien Parameter abhängt;
Bereitstellen (34) des zumindest eines Beobachtungsparameters (6) derart, dass dieser den mit der bevorstehenden Kollision des Kraftfahrzeugs in Verbindung stehenden Parameter für einen vorbekannten Kollisionsverlauf repräsentiert;
Bewerten einer Qualität (36) der vorläufigen Analysefunktion, indem deren Funktionsverlauf bei Verwendung des Beobachtungsparameters (6) als der freie Parameter der vorläufigen Analysefunktion mit einem zeitlichen Verlauf der kinematischen Größe des Fahrzeugs während des vorbekannten Kollisionsverlaufs verglichen wird;
Bereitstellen (38) einer weiteren vorläufigen analytischen Analysefunktion, die zumindest von einem freien Parameter abhängt und sich hinsichtlich zumindest eines funktionalen Zusammenhangs von der vorläufigen Analysefunktion unterscheidet;
Bewerten der Qualität (40) der weiteren vorläufigen Analysefunktion, indem deren Funktionsverlauf bei Verwendung des Beobachtungsparameters (6) als der freie Parameter der weiteren vorläufigen analytischen Analysefunktion mit dem zeitlichen Verlauf der kinematischen Größe des Fahrzeugs während des vorbekannten Kollisionsverlaufs verglichen wird; und
Verwerfen (42) der vorläufigen Analysefunktion als mögliche Analysefunktion, wenn die Qualität der weiteren vorläufigen Analysefunktion besser ist, als die der vorläufigen Analysefunktion.

10. Verfahren nach Anspruch 9, ferner umfassend:
Bereitstellen (44) einer vorbestimmten Menge von unterschiedlichen Basisfunktionen, die von jeweils zumindest einem Parameter abhängig sind, wobei
die vorläufigen Analysefunktion und die weitere vorläufige Analysefunktion unter Verwendung der vorbestimmten Menge von Basisfunktionen als analytische Funktionen bereitgestellt werden.

11. Verfahren nach Anspruch 10, bei dem die vorläufige Analysefunktion und die weitere Analysefunktion ausschließlich aus einer Kombination von Basisfunktionen der vorbestimmten Menge bestehen.

12. Verfahren nach einem der Ansprüche 9 bis 11, bei dem das Bereitstellen der weiteren Analysefunktion auf einem Verändern der vorläufigen Analysefunktion basiert, um basierend auf der vorläufigen Analysefunktion die weitere vorläufige Analysefunktion zu erhalten.

13. Verfahren nach Anspruch 12, bei dem das Verändern der vorläufigen Analysefunktion das Entfernen zumindest einer Basisfunktion, das Ersetzen zumindest einer Basisfunktion durch zumindest eine weitere Basisfunktion oder das Hinzufügen zumindest einer weiteren Basisfunktion umfasst.

14. Programm mit einem Programmcode zum Durchführen eines der Verfahren gemäß einem der Ansprüche 8 bis 13, wenn der Programmcode auf einem Computer, einem Prozessor oder einer programmierbaren Hardwarekomponente ausgeführt wird.

## Claims

1. Apparatus (2) for providing a trigger characteristic (12a, b) for a trigger signal (16) which causes triggering of a safety device in a motor vehicle in a manner which takes into account the trigger characteristic (12a, b), comprising:
an input interface (4) for receiving at least one observation parameter (6) representing a parameter which is connected to an imminent collision of the motor vehicle;
a prediction device (8) for providing a prediction function (22, 22a, 22b) which describes a temporal profile of at least one kinematic variable of the vehicle during a collision, wherein the provision of the prediction function (22, 22a, 22b) comprises the evaluation of a continuous analysis function using the observation parameter (6) as a parameter of the analysis function, wherein the analysis function is an analytical function; and
an assessment device (10) which is designed to provide the trigger characteristic (12a, b) if a predetermined characteristic is present in the prediction function (22, 22a, 22b).

2. Apparatus according to Claim 1, in which the predetermined characteristic is the exceeding of a predetermined maximum acceleration or the exceeding of a predetermined maximum average acceleration.

3. Apparatus according to one of the preceding claims, in which the trigger characteristic (12a, b) contains an item of information relating to a trigger stage which causes a selection of one of at least two possible trigger characteristics (12a, b) or trigger stages of the safety device.

4. Apparatus according to one of the preceding claims, which also has an evaluation device which is designed to compare the predicted temporal profile of the kinematic variable with a temporal profile of a measured value representing the kinematic variable, which temporal profile is determined after a start of the collision, in order to provide the trigger signal if the two variables match.

5. Apparatus according to one of the preceding claims, which also has an output interface which is designed to output the trigger signal to a safety device connected to the output interface, in particular an airbag or a belt tensioner, with the result that the trigger signal causes triggering of the safety device.

6. Apparatus according to one of the preceding claims, in which the prediction function (22, 22a, 22b) allocates a value for the kinematic variable of the vehicle to each of a multiplicity of successive times.

7. Apparatus according to one of the preceding claims, in which the at least one observation parameter (6) represents at least one of the parameters from the following group: possible vehicles involved in a collision, possible point of a collision on the vehicle, possible angle of impact, possible time of impact, possible speed of the vehicle and possible speed of a collision partner.

8. Method for providing a trigger characteristic (12a, b) for a trigger signal which causes triggering of a safety device in a motor vehicle, comprising:
receiving at least one observation parameter (6) representing a parameter which is connected to an imminent collision of the motor vehicle;
providing a prediction function (22, 22a, 22b) which describes a temporal profile of at least one kinematic variable of the vehicle during a collision, wherein the provision of the prediction function (22, 22a, 22b) comprises the evaluation of a continuous analysis function using the observation parameter (6) as a parameter of the analysis function, wherein an analytical function is used as the analysis function; and
providing the trigger characteristic (12a, b) if a predetermined characteristic is present in the prediction function (22, 22a, 22b).

9. Method for providing an analysis function, which describes a temporal profile of a kinematic variable of a vehicle during a collision, on the basis of at least one observation parameter (6) representing a parameter which is connected to an imminent collision of the motor vehicle, comprising:
providing (32) a preliminary analysis function which depends at least on one free parameter;
providing (34) the at least one observation parameter (6) in such a manner that it represents the parameter which is connected to the imminent collision of the motor vehicle for a previously known collision course;
assessing a quality (36) of the preliminary analysis function by comparing its function profile when using the observation parameter (6) as the free parameter of the preliminary analysis function with a temporal profile of the kinematic variable of the vehicle during the previously known collision course;
providing (38) a further preliminary analytical analysis function which depends at least on one free parameter and differs from the preliminary analysis function with respect to at least one functional relationship;
assessing the quality (40) of the further preliminary analysis function by comparing its function profile when using the observation parameter (6) as the free parameter of the further preliminary analytical analysis function with the temporal profile of the kinematic variable of the vehicle during the previously known collision course; and
rejecting (42) the preliminary analysis function as a possible analysis function if the quality of the further preliminary analysis function is better than that of the preliminary analysis function.

10. Method according to Claim 9, also comprising:
providing (44) a predetermined set of different basic functions which are each dependent on at least one parameter, wherein
the preliminary analysis function and the further preliminary analysis function are provided using the predetermined set of basic functions as analytical functions.

11. Method according to Claim 10, in which the preliminary analysis function and the further analysis function consist exclusively of a combination of basic functions in the predetermined set.

12. Method according to one of Claims 9 to 11, in which the provision of the further analysis function is based on changing the preliminary analysis function in order to obtain the further preliminary analysis function on the basis of the preliminary analysis function.

13. Method according to Claim 12, in which the changing of the preliminary analysis function comprises removing at least one basic function, replacing at least one basic function with at least one further basic function or adding at least one further basic function.

14. Program having a program code for carrying out one of the methods according to one of Claims 8 to 13 when the program code is executed on a computer, a processor or a programmable hardware component.

## Revendications

1. Ensemble (2) destiné à délivrer une caractéristique de déclenchement caractéristique de déclenchement (12a, b) pour un signal de déclenchement (16) qui a pour effet le déclenchement d'un dispositif de sécurité d'un véhicule automobile qui tient compte de la caractéristique de déclenchement caractéristique de déclenchement (12a, b), l'ensemble comprenant :
une interface d'introduction (4) qui reçoit au moins un paramètre d'observation (6) qui représente un paramètre associé à une menace de collision du véhicule automobile,
un dispositif de prédiction (8) qui délivre une fonction de prédiction (22, 22a, 22b) qui décrit l'évolution temporelle d'au moins une grandeur cinématique du véhicule pendant une collision, la mise à disposition de la fonction de prédiction (22, 22a, 22b) comprenant l'évaluation d'une fonction permanente d'analyse qui recourt à un paramètre d'observation (6) comme paramètre de la fonction d'analyse, la fonction d'analyse étant une fonction analytique et
un dispositif d'évaluation (10) configuré pour délivrer la caractéristique de déclenchement (12a, b) lorsqu'une caractéristique prédéterminée est présente dans la fonction de prédiction (22, 22a, 22b).

2. Ensemble selon la revendication 1, dans lequel la caractéristique prédéterminée est le dépassement d'une accélération maximale prédéterminée ou le dépassement d'une accélération moyenne maximale prédéterminée.

3. Ensemble selon l'une des revendications précédentes, dans lequel la caractéristique de déclenchement (12a, b) contient une information sur une étape du déclenchement qui a pour effet la sélection d'une parmi au moins deux caractéristiques possibles de déclenchement (12a, b) ou étapes possibles de déclenchement du dispositif de sécurité.

4. Ensemble selon l'une des revendications précédentes, présentant en outre un dispositif d'évaluation configuré pour comparer l'évolution temporelle prédite de la grandeur cinématique à une évolution temporelle définie après le début de la collision d'une valeur de mesure qui représente la grandeur cinématique, pour délivrer le signal de déclenchement en cas de correspondance entre les deux grandeurs.

5. Ensemble selon l'une des revendications précédentes, présentant en outre une interface de sortie configurée pour délivrer le signal de déclenchement à un dispositif de sécurité relié à l'interface de sortie, notamment un coussin gonflable de sécurité ou un tendeur de ceinture, de telle sorte que le signal de déclenchement ait pour effet le déclenchement du dispositif de sécurité.

6. Ensemble selon l'une des revendications précédentes, dans lequel la fonction de prédiction (22, 22a, 22b) attribue à chacun parmi plusieurs instants successifs une valeur de la grandeur cinématique du véhicule.

7. Ensemble selon l'une des revendications précédentes, dans lequel le ou les paramètres d'observation (6) représentent au moins un des paramètres sélectionnés dans l'ensemble des véhicules pouvant participer à une collision, des points possibles d'une collision sur le véhicule, des angles d'incidence possibles, des points d'incidence possibles, des vitesses possibles du véhicule et des vitesses possibles d'un partenaire à la collision.

8. Procédé de fourniture d'une caractéristique de déclenchement (12a, b) pour un signal de déclenchement qui a pour effet le déclenchement d'un dispositif de sécurité dans un véhicule automobile, le procédé comportant les étapes qui consistent à :
recevoir au moins un paramètre d'observation (6) qui représente un paramètre associé à une menace de collision du véhicule automobile,
mettre à disposition une fonction de prédiction (22, 22a, 22b) qui décrit l'évolution temporelle d'au moins une grandeur cinématique du véhicule pendant une collision, la mise à disposition de la fonction de prédiction (22, 22a, 22b) comportant l'évaluation d'une fonction permanente d'analyse qui recourt au paramètre d'observation (6) comme paramètre de la fonction d'analyse, la fonction d'analyse utilisée étant une fonction analytique et
délivrer la caractéristique de déclenchement (12a, b) lorsqu'une caractéristique prédéterminée est présente dans la fonction de prédiction (22, 22a, 22b).

9. Procédé de mise à disposition d'une fonction d'analyse qui décrit l'évolution temporelle d'une grandeur cinématique d'un véhicule pendant une collision en fonction d'au moins un paramètre d'observation qui représente un qui représente un paramètre associé à une menace de collision du véhicule automobile, comportant les étapes qui consistent à
délivrer (32) une fonction préalable d'analyse qui dépend d'au moins un paramètre libre,
délivrer (34) le ou les paramètres d'observation (6) de telle sorte que ces derniers représentent un paramètre associé à une menace de collision du véhicule automobile dans le cas de l'évolution antérieure connue d'une collision,
évaluer la qualité (36) de la fonction d'analyse préalable en comparant l'évolution de la fonction par recours au paramètre d'observation (6) comme paramètre libre de la fonction d'analyse préalable à l'évolution temporelle de la grandeur cinématique du véhicule pendant l'évolution antérieure connue de la collision,
mettre à disposition (38) une autre fonction analytique d'analyse préalable qui dépend d'au moins un paramètre libre et qui se distingue de la fonction d'analyse préalable par au moins une association fonctionnelle,
évaluer la qualité (40) de l'autre fonction d'analyse préalable en comparant l'évolution de la fonction par recours au paramètre d'observation (6) comme paramètre libre de la fonction d'analyse préalable à l'évolution temporelle de la grandeur cinématique du véhicule pendant l'évolution antérieure connue de la collision et
rejeter (42) la fonction d'analyse préalable comme fonction d'analyse possible si la qualité de l'autre fonction d'analyse préalable est meilleure que celle de la fonction d'analyse préalable.

10. Procédé selon la revendication 9, comprenant en outre les étapes qui consistent à :
mettre à disposition (44) une quantité prédéterminée des différentes fonctions de base qui dépendent chacune d'au moins un paramètre,
la fonction d'analyse préalable et l'autre fonction d'analyse préalable étant mises à disposition en recourant à la qualité prédéterminée de fonctions de base servant de fonctions analytiques.

11. Procédé selon la revendication 10, dans lequel la fonction d'analyse préalable et l'autre fonction d'analyse sont exclusivement constituées d'une combinaison de fonctions de base sélectionnées parmi la quantité prédéterminée.

12. Procédé selon l'une des revendications 9 à 11, dans lequel la fourniture de l'autre fonction d'analyse est basée sur une modification de la fonction d'analyse préalable pour obtenir l'autre fonction d'analyse préalable sur la base de la fonction d'analyse préalable.

13. Procédé selon la revendication 12, dans lequel la modification de la fonction d'analyse préalable comporte le retrait d'au moins une fonction de base, le remplacement d'au moins une fonction de base par au moins une autre fonction de base ou l'ajout d'au moins une autre fonction de base.

14. Programme doté d'un code de programme permettant de mettre en oeuvre un des procédés selon l'une des revendications 8 à 13 lorsque le code de programme est exécuté sur un ordinateur, un processeur ou un composant électronique programmable.
